# FASCICULE DE BREVET EUROPEEN

(11) **EP 0 898 877 B1**
(45) Date de publication et mention de la délivrance du brevet: **02.04.2003**
(21) Numéro de dépôt: 98450014.0
(22) Date de dépôt: 21.08.1998
(51) Int. Cl.: A01G 3/04, A01G 17/02

(54) **Dispositif pour l'effeuillage des vignes**
Vorrichtung zum Entlauben von Reben
Device for defoliating grapevines

(30) Priorité: 21.08.1997 FR 9710668; 27.01.1998 FR 9801119
(43) Date de publication de la demande: 03.03.1999
(73) Titulaire: Industrie et Nature de Navarre (I2N), Société Anonyme, 64170 Artix (FR)
(72) Inventeur: Torable, Louis, 64120 Larceveau (FR)
(74) Mandataire: Thébault, Jean-Louis

(56) Documents cités:
- EP-A- 0 278 607
- EP-A- 0 597 253
- DE-A- 2 931 564
- DE-U- 29 518 392
- FR-A- 2 368 215
- FR-A- 2 406 384
- FR-A- 2 483 168

## Description

La présente invention a pour objet un dispositif pour l'effeuillage des vignes, avec positionnement automatique du dispositif par rapport à la végétation.

Les dispositifs pour l'effeuillage sont largement répandus dans le domaine viticole, et s'adaptent aisément sur des supports motorisés de type tracteurs agricoles ou enjambeurs. Ils permettent, avant la vendange, de couper une partie importante du feuillage porté par les ceps, afin de dégager les grappes pour faciliter le mûrissement des raisins et la cueillette desdites grappes.

Un dispositif pour l'effeuillage comprend en général une tête d'effeuillage munie de moyens d'aspiration des feuilles et de moyens de coupe qui permettent de couper les feuilles aspirées par le dispositif. De préférence, une grille de protection est intercalée entre les moyens de coupe et la vigne afin de protéger les grappes de raisins.

Cette tête d'effeuillage peut être inclinée, et/ou translatée verticalement, et/ou écartée de l'axe du rang de vigne à l'aide d'actionneurs manuels, électriques, pneumatiques, hydrauliques, ou mécaniques.

Ainsi, suivant la configuration du terrain et des rangs de vigne, l'utilisateur règle approximativement l'orientation de la tête d'effeuillage par rapport au rang de vigne avant l'effeuillage. Ensuite, lors de l'effeuillage, l'utilisateur positionne la tête d'effeuillage par rapport au rang de vigne en approchant plus ou moins le support motorisé auquel la tête d'effeuillage est rattachée, suivant l'importance du feuillage des différents ceps.

Un dispositif pour l'effeuillage comprenant des moyens de pilotage automatique de la tête d'effeuillage est décrit dans le brevet EP 597.253. Il comprend un support motorisé de chaque côté duquel sont rapportées deux têtes d'effeuillage. Chaque tête est fixée à l'extrémité d'un parallélogramme déformable, qui en se déformant permet d'obtenir les différents mouvements de ladite tête, grâce à deux actionneurs.

Chaque tête comprend en outre, des moyens d'aspiration , des moyens de coupe, et un tapis roulant, synchronisé avec l'avancement du support motorisé, qui permet de renseigner les moyens de pilotage automatique sur la position de la tête par rapport au rang de vigne, grâce à des capteurs.

De part sa conception, le parallélogramme ne permet pas d'obtenir des mouvements simples de la tête d'effeuillage, mais des mouvements combinés. Ainsi, une translation horizontale est automatiquement liée à une translation verticale, et la rotation de la tête à des translations verticale et horizontale.

Aussi, pour obtenir un mouvement simple tel que la rotation unique de la tête, les moyens de pilotage automatique agissent simultanément sur l'inclinaison de la tête et sur son écartement afin de corriger la translation horizontale induite lors de la déformation du parallélogramme.

Par ailleurs, on constate que les mouvements d'inclinaison ou d'écartement de la tête induisent automatiquement une translation verticale parasite de la tête d'effeuillage qui engendre un mauvais positionnement de ladite tête par rapport au rang de vigne, ce qui se traduit par un effeuillage de moins bonne qualité.

Enfin, pour obtenir un mouvement simple, les moyens de pilotage automatique sont obligés de piloter plusieurs actionneurs, ce qui se traduit par un dispositif complexe, coûteux, qui ne donne pas pleinement satisfaction quant à la régularité de l'effeuillage.

La présente invention vise à pallier les problèmes des dispositifs de l'art antérieur en proposant un dispositif d'effeuillage qui comprend des moyens de pilotage automatique de la tête d'effeuillage, et des moyens d'articulation de ladite tête par rapport à son support motorisé qui autorisent des mouvements simples et une position précise de la tête d'effeuillage par rapport au rang de vigne, ledit dispositif étant de conception relativement simple, et donnant pleinement satisfaction quant à la fiabilité, à la qualité et à la régularité de l'effeuillage.

A cet effet, l'invention a pour objet un dispositif d'effeuillage, notamment pour les vignes, relié à un support motorisé, comprenant une tête d'effeuillage munie de moyens de coupe et de moyens d'aspiration, caractérisé en ce qu'il comprend d'une part, des moyens d'écartement et des moyens d'inclinaison de la tête par rapport au support, et d'autre part, un premier capteur de position et un second capteur de position susceptibles de commander, par l'intermédiaire de moyens de pilotage, respectivement lesdits moyens d'inclinaison et lesdits moyens d'écartement.

De préférence, le dispositif comprend des moyens de réglage en hauteur de la tête d'effeuillage.

Selon un mode de réalisation, le dispositif comprend un bras télescopique dont la longueur est susceptible d'être modifiée par les moyens d'écartement, et qui relie la tête d'effeuillage au support motorisé, ladite tête étant susceptible de pivoter autour d'un axe disposé sensiblement à l'extrémité libre du bras grâce aux moyens d'inclinaison.

Avantageusement, les moyens d'aspiration comprennent une turbine disposée dans un carter, et au moins une bouche d'aspiration ménagée sur un flanc du carter, de préférence parallèle au sens d'avancement, les moyens de coupe étant disposés au droit de ladite bouche d'aspiration et sensiblement dans le plan dudit flanc.

Selon l'invention, la tête d'effeuillage comprend des moyens de réglage de la densité de l'effeuillage.

Selon un mode de réalisation, chaque capteur de position comprend un patin, réalisé à partir d'une plaque conformée en quart de cylindre, susceptible de pivoter à l'extrémité d'un support relié à la tête d'effeuillage, et d'actionner un contacteur lors de son pivotement, l'extrémité libre du patin étant susceptible d'être en contact avec la végétation.

Dans ce cas, les moyens de réglage de la densité de l'effeuillage sont réalisés par des moyens de translation du support de patin par rapport au carter qui permettent de régler l'écartement entre l'extrémité libre du patin et le plan de coupe.

De préférence, le capteur qui commande les moyens d'écartement sont disposés en partie inférieure de la tête d'effeuillage, et en ce que le capteur qui commande les moyens d'inclinaison sont disposés en partie supérieure de la tête d'effeuillage.

Dans le cas d'un attelage trois points, le dispositif comprend un châssis, un mât susceptible de pivoter par rapport audit châssis, un support de bras qui peut se translater le long dudit mât, le bras télescopique étant susceptible de pivoter, grâce à des moyens de pivotement, suivant un axe sensiblement horizontal par rapport audit support afin d'être placé indifféremment à droite ou à gauche du châssis.

Dans ce cas, les moyens de pilotage comprennent des moyens d'inversion afin que lorsque la tête d'effeuillage est à gauche du châssis, le premier capteur de position est lié aux moyens d'inclinaison, et le second capteur aux moyens d'écartement, et lorsque la tête d'effeuillage est à droite du châssis, le premier capteur est lié aux moyens d'écartement, et le second capteur aux moyens d'inclinaison.

D'autres caractéristiques et avantages ressortiront de la description qui va suivre, donnée à titre d'exemple uniquement et en regard des dessins annexés sur lesquels:
- la figure 1 est une vue en perspective du dispositif pour l'effeuillage des vignes selon une variante portée par un tracteur agricole grâce à un attelage trois points,
- la figure 2 est une vue en élévation du dispositif illustré sur la figure 1,
- la figure 3 est une vue de dessus de la tête de coupe, et
- la figure 4 est une vue schématique du dispositif pour l'effeuillage des vignes selon une variante fixée à un enjambeur.

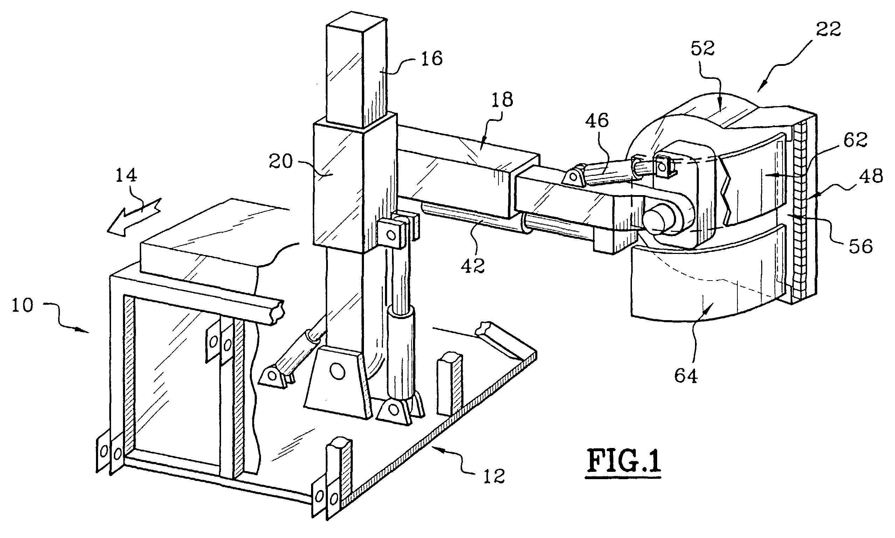

Un dispositif 10 pour l'effeuillage des vignes attelé à un tracteur agricole (non représenté) est représenté sur la figure 1. Ce dispositif est de préférence disposé sur un châssis 12, muni éventuellement de roues, qui se fixe à l'arrière d'un tracteur grâce à un attelage trois points.

Lors de l'effeuillage, l'ensemble se déplace entre deux rangs de vigne (non représentés) dans le sens matérialisé par la flèche 14, sensiblement parallèle aux rangs de vigne.

Selon l'invention, le dispositif comprend un mât 16 relié au châssis 12, un bras télescopique 18, qui est relié au mât 16 par l'intermédiaire d'un support de bras 20, et à l'extrémité duquel est fixée une tête d'effeuillage 22.

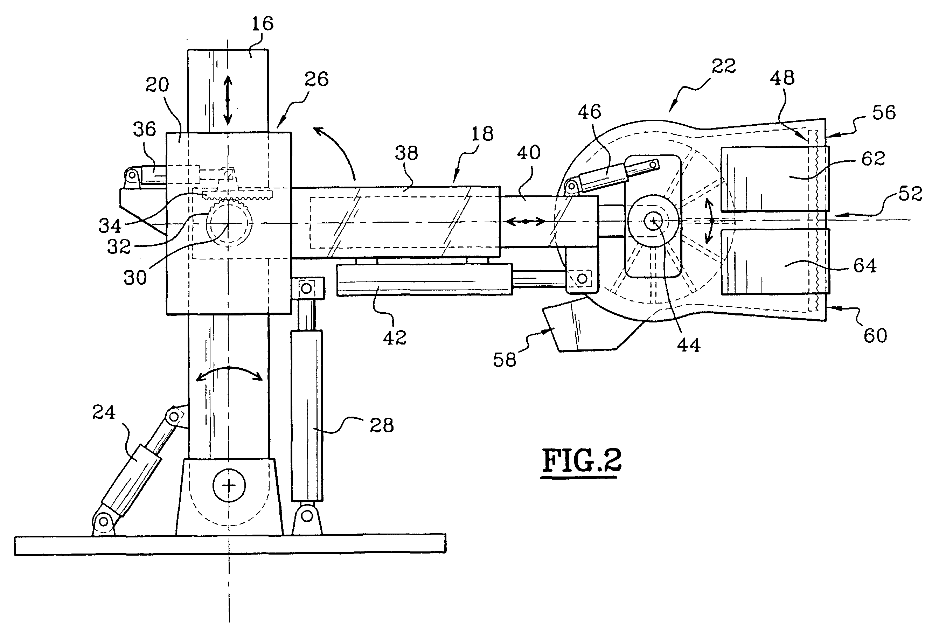

Le mât 16 peut pivoter par rapport au châssis 12 dans un plan perpendiculaire au sens d'avancement, et peut s'incliner approximativement de ± 25° par rapport à la verticale grâce à des moyens 24 d'inclinaison, par exemple un actionneur comme illustré sur la figure 2.

Le support de bras 20 peut se translater par rapport au mât 16 grâce à une glissière 26 et un actionneur 28, l'ensemble constituant des moyens de réglage en hauteur du bras télescopique 18.

Le bras télescopique 18 peut pivoter par rapport au support de bras 20 suivant un axe 30 sensiblement parallèle au sens d'avancement grâce à des moyens de pivotement, ce qui permet à la tête d'effeuillage d'être placée indifféremment à droite ou à gauche du châssis 12 comme cela sera expliqué ultérieurement.

Afin de faire pivoter le bras télescopique 18, les moyens de pivotement comprennent un pignon 32 coaxial à l'axe 30 de rotation du bras, qui peut être entraîné en rotation par une crémaillère 34 déplacée en translation par un actionneur 36.

Ce bras télescopique 18 est réalisé en deux parties, une première partie 38 reliée au support de bras 20, et une seconde partie 40, qui peut coulisser par rapport à la première, et à l'extrémité de laquelle la tête d'effeuillage 22 est fixée.

Des moyens d'écartement, par exemple un actionneur 42 sont également prévus afin de modifier la longueur du bras télescopique 18 en faisant coulisser la seconde partie 40 du bras par rapport à la première 38.

La tête d'effeuillage 22 qui est fixée à l'extrémité libre du bras télescopique 18, peut pivoter autour d'un axe 44 par rapport au bras télescopique, dans un plan perpendiculaire au sens d'avancement, grâce à des moyens 46 d'inclinaison par exemple un actionneur.

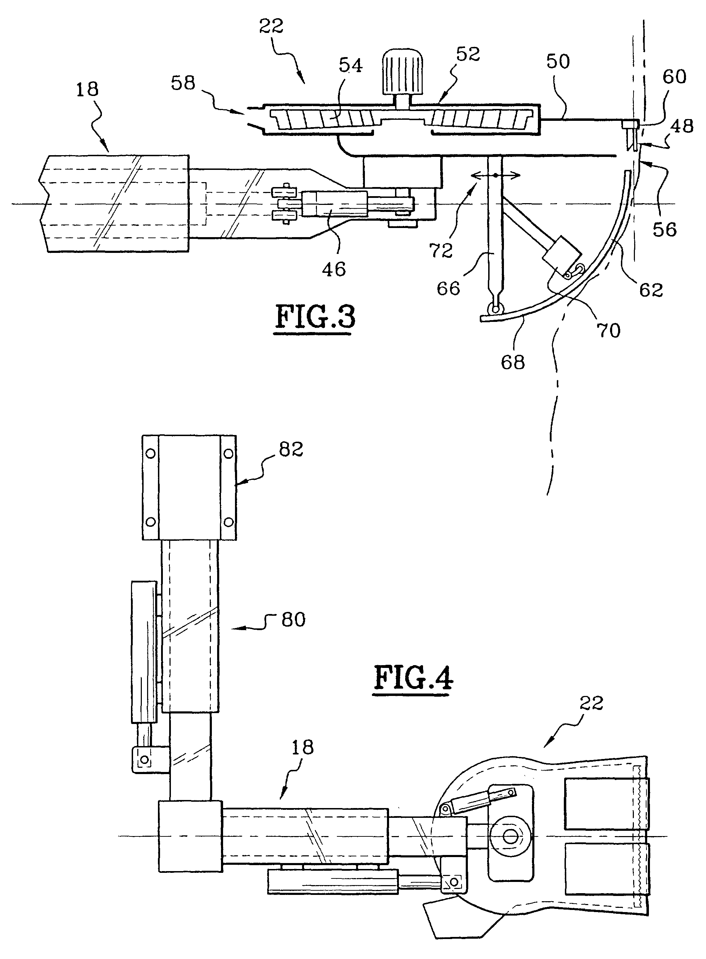

La tête d'effeuillage 22, illustrée en détail sur la figure 3, comprend des moyens 48 de coupe et un carter 50 dans lequel sont placés des moyens 52 d'aspiration.

Les moyens 52 d'aspiration comprennent une turbine 54 centrifuge, une bouche 56 d'aspiration et une bouche d'éjection 58 ménagée dans le carter 50.

Selon le mode de réalisation illustré, la turbine 54 a un axe de rotation parallèle au sens d'avancement, et permet de créer un flux d'air de la bouche 56 d'aspiration vers la bouche 58 de refoulement.

La bouche 56 d'aspiration est ménagée sur un flanc 60 du carter, susceptible d'être en contact avec la végétation, parallèle au sens de déplacement, et donc parallèle au rang de vigne lors de l'effeuillage.

En complément, les moyens 48 de coupe sont disposés au droit de la bouche d'aspiration 56, sensiblement dans le plan du flanc 60 appelé plan de coupe dans la suite de la description.

La bouche 56 d'aspiration a de préférence une forme de lumière étroite, rectangulaire, qui s'étend sensiblement sur toute la hauteur du plan de coupe 60.

Les moyens 48 de coupe sont de préférence réalisés par une barre de coupe, disposée sur un grand côté de la bouche 56 d'aspiration, afin de couper les feuilles aspirées.

Avec ce mode de réalisation des moyens 48 de coupe et 52 d'aspiration, on obtient une bande de travail verticale très réduite en largeur, ce qui permet d'éviter d'aspirer les grappes, et qui se traduit par une grande précision de positionnement dans la végétation dans le sens d'avancement.

Selon l'invention, la tête d'effeuillage comprend un premier capteur 62 de position et un second capteur 64 de position disposés devant la bouche d'aspiration dans le sens d'avancement.

Sur la figure 1, la tête d'effeuillage est disposée, suivant le sens d'avancement, à gauche du tracteur. Dans ce cas, le premier capteur 62 est dit d'inclinaison et le second capteur 64 est dit d'écartement, le capteur d'inclinaison 62 étant positionné de préférence au-dessus du capteur d'écartement 64.

Grâce à cette position relative des capteurs 62, 64, on obtient un meilleur effeuillage, car le capteur d'écartement est placé au droit de la partie inférieure du pied, où se trouvent en général les fruits, et le capteur d'inclinaison au droit de la partie supérieur du pied, partie qui doit être la plus effeuillée.

Ces capteurs 62, 64 renseignent des moyens de pilotage qui sont susceptibles de piloter séparément les actionneurs 42 d'écartement et 46 d'inclinaison, afin de positionner parfaitement la tête d'effeuillage, et plus précisément le plan de coupe 60 par rapport au rang de vigne.

Ainsi, les informations du capteur 62 d'inclinaison permettent de commander l'actionneur d'inclinaison 46, et celles du capteur d'écartement 64 de commander l'actionneur d'écartement 42.

Cet agencement des différents organes de déplacement et capteurs de position permet de dissocier les mouvements relatifs de la tête d'effeuillage par rapport au rang de vigne et d'obtenir des commandes et des mouvements simples et précis, ce qui se traduit par un guidage de ladite tête très performant et précis sans abîmer les fruits.

Selon un mode de réalisation décrit sur la figure 3, chacun des capteurs 62, 64 comprend un support 66 en forme de "Y", dont la base est reliée au carter 50, un patin 68 réalisé à partir d'une plaque conformée en quart de cylindre, relié à une première extrémité dudit support 66, et un contacteur 70 disposé à la seconde extrémité dudit support 66, et susceptible d'être actionné par le patin 68.

Le patin 68 est susceptible de pivoter par rapport au support 66 suivant un axe sensiblement perpendiculaire au sens d'avancement 14 et parallèle au plan de coupe 60, et son extrémité libre, susceptible d'être en contact avec la végétation, est maintenue entre le rang de vigne et le plan de coupe 60 grâce à des moyens de rappel élastique (non représenté).

Ainsi, lorsque le patin d'un des deux capteurs vient en contact contre un obstacle, il pivote, et actionne le contacteur 70. Ce dernier renseigne alors les moyens de pilotage qui agissent sur l'actionneur d'inclinaison 46.

En complément, le support de capteur 66 peut se translater par rapport au carter 50 suivant une direction perpendiculaire au plan de coupe 60, grâce à des moyens 72 de translation, pour permettre le réglage de l'écartement entre l'extrémité libre du patin 68 et le plan de coupe 60 c'est-à-dire le réglage de la profondeur de coupe. Ces moyens 76 de translation constituent ainsi des moyens de réglage de la densité de l'effeuillage.

La sensibilité de ces capteurs 62, 64 est une caractéristique essentielle de la tête d'effeuillage car ils ne doivent prendre qu'un léger appui sur la végétation sans abîmer les fruits.

Le dispositif d'effeuillage a été décrit et illustré sur la figure 1 en position gauche par rapport au sens de déplacement du tracteur. Comme précisé précédemment, le bras télescopique 18 peut pivoter par rapport à l'axe 30 afin de placer la tête d'effeuillage à droite ou à gauche du tracteur tout en gardant de préférence le capteur d'écartement en dessous du capteur d'inclinaison.

Pour ce faire, les moyens de pilotage comprennent des moyens d'inversion des capteurs 62, 64. Ainsi, lorsque la tête d'effeuillage est placée à droite le premier capteur 62 devient le capteur d'écartement et le second capteur 64 devient le capteur d'inclinaison.

Le fonctionnement du dispositif d'effeuillage selon l'invention est expliqué ci-dessous.

Suivant la configuration du terrain et de la végétation, l'utilisateur règle préalablement, l'inclinaison du mât 16 à l'aide de l'actionneur 24 et la hauteur du bras télescopique 18 à l'aide de l'actionneur 28 afin que la tête d'effeuillage travaille dans des conditions optimales.

Ces conditions sont notamment obtenues lorsque le bras télescopique 18 est perpendiculaire au rang de vigne. Ainsi, les mouvements obtenus par les actionneurs 62 d'inclinaison ou 64 d'écartement sont simples et n'entraînent aucune translation verticale de la tête par rapport audit rang.

Suivant le degré d'automatisation du dispositif, l'utilisateur pourra modifier à son gré ces deux réglages en court d'effeuillage.

Lors de l'effeuillage, le dispositif se translate sensiblement parallèlement au rang de vigne, et la tête est amenée en contact avec le rang.

Ainsi, suivant l'importance de la végétation, les capteurs 62 d'inclinaison et 64 d'écartement agissent respectivement sur les actionneurs 46 d'inclinaison et 42 d'écartement par l'intermédiaire des moyens de pilotage afin de positionner la tête d'effeuillage et plus précisément le plan de coupe 60 par rapport au rang de vigne.

Ce pilotage automatique de la tête d'effeuillage permet un guidage sur la végétation très performant et très précis sans abîmer les fruits.

Par ailleurs, l'utilisateur peut régler la densité de l'effeuillage en jouant sur la sensibilité des capteurs. Selon le mode de réalisation décrit, ce réglage peut se faire en réglant l'écartement de l'extrémité libre des patins 68 et du plan de coupe 60.

Une autre variante du dispositif d'effeuillage fixée à un enjambeur est illustrée sur la figure 4, les organes identiques à la variante précédente ayant les mêmes références.

Selon ce mode de réalisation, le dispositif 10 comprend un bras télescopique 80 sensiblement verticale, fixé à un enjambeur par des moyens 82 de fixation, et à l'extrémité duquel est fixé perpendiculairement un bras télescopique 18 identique à la variante précédente.

Ce bras télescopique vertical 80 constitue des moyens de réglage en hauteur du bras télescopique horizontal 18, et permet de régler en hauteur la tête d'effeuillage 22 identique à la variante précédente.

De préférence, l'enjambeur comprend deux dispositifs d'effeuillage symétriques par rapport à l'axe longitudinal dudit enjambeur ce qui permet d'effeuiller en même temps les deux côtés du rang de vigne.

La description qui vient d'être faite du dispositif d'effeuillage a été donnée à titre d'exemple uniquement. Il est bien entendu que la présente invention englobe de nombreuses variantes.

Ainsi, selon le degré d'automatisation du dispositif, les différents moyens de réglage peuvent être manuels ou assistés par des actionneurs.

D'autre part, ces actionneurs peuvent être de type mécanique, hydraulique, pneumatique, ou analogue.

De la même façon, les capteurs de position peuvent être de type mécanique, électrique, radar ou analogue.

Enfin, le dispositif a été décrit pour l'effeuillage des vignes, mais il peut aussi bien être utilisé pour l'effeuillage partiel de toute végétation palissée ainsi que pour le taillage des haies, arbres à feuilles et résineux.

## Revendications

1. Dispositif d'effeuillage, notamment pour les vignes, relié à un support motorisé, comprenant une tête d'effeuillage (22) munie de moyens (48) de coupe et de moyens (52) d'aspiration, des moyens (42) d'écartement et des moyens (46) d'inclinaison de la tête (22) par rapport au support, **caractérisé en ce qu'**il comprend, un premier (62) capteur de position et un second (64) capteur de position susceptibles de commander séparément, par l'intermédiaire de moyens de pilotage, respectivement lesdits moyens (46) d'inclinaison et lesdits moyens (42) d'écartement.

2. Dispositif d'effeuillage selon la revendication 1, **caractérisé en ce que** le dispositif comprend des moyens (20, 26, 28; 80) de réglage en hauteur de la tête d'effeuillage (22).

3. Dispositif d'effeuillage selon la revendication 1 ou 2, **caractérisé en ce qu'**il comprend un bras télescopique (18) dont la longueur est susceptible d'être modifiée par les moyens (42) d'écartement, et qui relie la tête d'effeuillage (22) au support motorisé, ladite tête étant susceptible de pivoter autour d'un axe (44) disposé sensiblement à l'extrémité libre du bras grâce aux moyens (46) d'inclinaison.

4. Dispositif d'effeuillage selon l'une quelconque des revendications précédentes, **caractérisé en ce que** les moyens (52) d'aspiration comprennent une turbine (54) disposée dans un carter (50), et au moins une bouche d'aspiration (56) ménagée sur un flanc du carter (50), de préférence parallèle au sens d'avancement, les moyens (48) de coupe étant disposés au droit de ladite bouche d'aspiration (56) et sensiblement dans le plan dudit flanc.

5. Dispositif d'effeuillage selon l'une quelconque des revendications précédentes, **caractérisé en ce que** la tête d'effeuillage (22) comprend des moyens de réglage de la densité de l'effeuillage.

6. Dispositif d'effeuillage selon l'une quelconque des revendications précédentes, **caractérisé en ce que** chaque capteur de position (62, 64) comprend un patin (68), réalisé à partir d'une plaque conformée en quart de cylindre, susceptible de pivoter à l'extrémité d'un support (66) relié à la tête d'effeuillage, et d'actionner un contacteur (70) lors de son pivotement, l'extrémité libre du patin (68) étant susceptible d'être en contact avec la végétation.

7. Dispositif d'effeuillage selon la revendication 6, **caractérisé en ce que** les moyens de réglage de la densité de l'effeuillage sont réalisés par des moyens (72) de translation du support (66) de patin par rapport au carter (50) qui permettent de régler l'écartement entre l'extrémité libre du patin et le plan de coupe.

8. Dispositif d'effeuillage selon l'une quelconque des revendications précédentes, **caractérisé en ce que** le capteur qui commande les moyens (42) d'écartement sont disposés en partie inférieure de la tête d'effeuillage (22), et **en ce que** le capteur qui commande les moyens (46) d'inclinaison sont disposés en partie supérieure de la tête d'effeuillage.

9. Dispositif d'effeuillage selon l'une quelconque des revendications précédentes, **caractérisé en ce que**, dans le cas d'un attelage trois points, le dispositif comprend un châssis (12), un mât (16) susceptible de pivoter par rapport audit châssis (12), un support de bras (20) qui peut se translater le long dudit mât, le bras télescopique étant susceptible de pivoter, grâce à des moyens de pivotement (32, 34, 36), suivant un axe sensiblement horizontal par rapport audit support afin d'être placé indifféremment à droite ou à gauche du châssis.

10. Dispositif selon la revendication 9, **caractérisé en ce que** les moyens de pilotage comprennent des moyens d'inversion afin que lorsque la tête d'effeuillage est à gauche du châssis, le premier capteur de position (62) est lié aux moyens d'inclinaison (46), et le second capteur (64) aux moyens d'écartement (42), et lorsque la tête d'effeuillage est à droite du châssis, le premier capteur (62) est lié aux moyens d'écartement (42), et le second capteur (62) aux moyens d'inclinaison (46).

## Claims

1. A stripping device, in particular for vines, connected to a motorised support, comprising a stripping head (22) provided with cutting means (48) and suction means (52), separating means (42) and means (46) for inclining the head (22) with respect to the support, **characterised in that** it comprises a first position sensor (62) and a second position sensor (64) able to control separately, by means of control means, respectively said inclination means (46) and said separation means (42).

2. A stripping device according to claim 1, **characterised in that** the device comprises means (20, 26, 28; 80) for adjusting the stripping head (22) for height.

3. A stripping device according to claim 1 or 2, **characterised in that** it comprises a telescopic arm (18) whose length is able to be modified by the separation means (42), and which connects the stripping head (22) to the motorised support, said head being able to pivot about a shaft (44) disposed substantially at the free end of the arm by virtue of the inclination means (46).

4. A stripping device according to any one of the preceding claims, **characterised in that** the suction means (52) comprises a turbine (54) disposed in a casing (50) and at least one suction nozzle (56) provided on one side of the casing (50), preferably parallel to the direction of travel, the cutting means (48) being disposed in line with said suction nozzle (56) and substantially in the same plane as said flank.

5. A stripping device according to any one of the preceding claims, **characterised in that** the stripping head (22) comprises means for adjusting the density of stripping.

6. A stripping device according to any one of the preceding claims, **characterised in that** each position sensor (62, 64) comprises a runner (68), formed from a plate shaped as a quarter of a cylinder, able to pivot at the end of a support (66) connected to the stripping head and to actuate a contactor (70) when it pivots, the free end of the runner (68) being able to be in contact with the vegetation.

7. A stripping device according to claim 6, **characterised in that** the means for adjusting the density of the stripping is implemented by means (72) for moving the runner support (66) in translation with respect to the casing (50) to make it possible to adjust the separation between the free end of the runner and the cutting plane.

8. A stripping device according to any one of the preceding claims, **characterised in that** the sensor which controls the separation means (42) is disposed at the bottom part of the stripping head (22), and **in that** the sensor which controls the inclination means (46) is disposed at the top part of the stripping head.

9. A stripping device according to any one of the preceding claims, **characterised in that**, in the case of a three-point coupling, the device comprises a chassis (12), a mast (16) able to pivot with respect to said chassis (12), an arm support (20) which is able to move in translation along said mast, the telescopic arm being able to pivot, by virtue of pivoting means (32, 34, 36), on an axis which is substantially horizontal with respect to said support in order to be placed either to the right or to the left of the chassis.

10. A device according to claim 9, **characterised in that** the control means comprises reversal means wherein, when the stripping head is to the left of the chassis, the first position sensor (62) is connected to the inclination means (46) and the second sensor (64) to the separation means (42) and, when the stripping head is to the right of the chassis, the first sensor (62) is connected to the separation means (42) and the second sensor (62) to the inclination means (46).

## Patentansprüche

1. Entlaubungsvorrichtung, insbesondere für Weinreben, die mit einem motorisierten Träger verbunden ist, der einen Entlaubungskopf (22) aufweist, der mit Mitteln (48) zum Schneiden und Mitteln (52) zum Ansaugen, mit Mitteln (42) für den Abstand und Mitteln (46) für die Neigung des Kopfs (22) relativ zum Träger ausgestattet ist, **dadurch gekennzeichnet, daß** ein erster Lagesensor (62) und ein zweiter Lagesensor (64) vorgesehen sind, die über Steuermittel die Mittel (46) für die Neigung bzw. die Mittel (42) für den Abstand getrennt steuern können.

2. Entlaubungsvorrichtung nach Anspruch 1, **dadurch gekennzeichnet, daß** sie Mittel (20, 26, 28; 80) zum Regeln der Höhe des Entlaubungskopfes (22) umfaßt.

3. Entlaubungsvorrichtung nach Anspruch 1 oder 2, **dadurch gekennzeichnet, daß** sie einen Teleskoparm (18) umfaßt, dessen Länge durch die Mittel (42) für den Abstand veränderbar ist und der den Entlaubungskopf (22) mit dem motorisierten Träger verbindet, wobei der Kopf kraft der Mittel (46) für die Neigung um eine Achse (44) schwenkbar ist, die im wesentlichen am freien Ende des Arms angeordnet ist.

4. Entlaubungsvorrichtung nach einem der vorhergehenden Ansprüche, **dadurch gekennzeichnet, daß** die Mittel (52) zum Ansaugen eine Turbine (54), die in einem Gehäuse (50) angeordnet ist, und mindestens eine Ansaugmündung (56) aufweisen, die an einer Seite des Gehäuses (50), vorzugsweise parallel zur Verfahrrichtung, ausgespart ist, wobei die Mittel (48) zum Schneiden am Ort der Ansaugmündung (56) und im wesentlichen in der Ebene der Seite angeordnet sind.

5. Entlaubungsvorrichtung nach einem der vorhergehenden Ansprüche, **dadurch gekennzeichnet, daß** der Entlaubungskopf (22) Mittel zum Regeln der Laubdichte umfaßt.

6. Entlaubungsvorrichtung nach einem der vorhergehenden Ansprüche, **dadurch gekennzeichnet, daß** jeder Lagesensor (62, 64) eine Kufe (68) aufweist, die aus einer Platte hergestellt ist, die einem Viertel eines Zylinders entspricht, und um ein Ende einer Stützvorrichtung (66), die mit dem Entlaubungskopf verbunden ist, schwenkbar ist und während des Schwenkens einen Kontakt (70) betätigen kann, wobei das freie Ende der Kufe (68) die Vegetation berühren kann.

7. Entlaubungsvorrichtung nach Anspruch 6, **dadurch gekennzeichnet, daß** die Mittel zum Regeln der Laubdichte als Mittel (72) zum Verfahren des Trägers (66) der Kufe relativ zum Gehäuse (50) ausgeführt sind, wodurch der Abstand zwischen dem freien Ende der Kufe und der Schnittebene regelbar ist.

8. Entlaubungsvorrichtung nach einem der vorhergehenden Ansprüche, **dadurch gekennzeichnet, daß** der Sensor, der die Mittel (42) für den Abstand steuert, am unteren Abschnitt des Entlaubungskopfs (22) angeordnet ist, und daß der Sensor, der die Mittel (46) für die Neigung steuert, am oberen Abschnitt des Entlaubungskopfs angeordnet ist.

9. Entlaubungsvorrichtung nach einem der vorhergehenden Ansprüche, **dadurch gekennzeichnet, daß** für den Fall einer Dreipunktkupplung die Vorrichtung einen Rahmen (12), einen Mast (16), der relativ zum Rahmen (12) schwenkbar ist, und einen Armträger (20), der entlang des Masts verfahrbar ist, umfaßt, wobei der Teleskoparm über Mittel zum Schwenken (32, 34, 36) um eine relativ zum Träger im wesentlichen horizontale Achse schwenkbar ist, um entweder rechts oder links des Rahmens angeordnet zu werden.

10. Vorrichtung nach Anspruch 9, **dadurch gekennzeichnet, daß** die Steuermittel Umkehrmittel umfassen, so daß, wenn der Entlaubungskopf sich links des Rahmens befindet, der erste Lagesensor (62) mit den Mitteln (46) für die Neigung und der zweite Lagesensor (64) mit den Mitteln (42) für den Abstand verbunden ist, und wenn der Entlaubungskopf sich rechts des Rahmens befindet, der erste Lagesensor (62) mit den Mitteln (42) für den Abstand und der zweite Lagesensor (62) mit den Mitteln (46) für die Neigung verbunden ist.
